Europäisches Patentamt

European Patent Office

Office européen des brevets

(11) Numéro de publication : **0 130 911**
**B1**

## (12) FASCICULE DE BREVET EUROPÉEN

(45) Date de publication du fascicule du brevet :
**27.05.87**

(21) Numéro de dépôt : **84401376.3**

(22) Date de dépôt : **28.06.84**

(51) Int. Cl.⁴ : **G 21 C 13/06**

(54) **Dispositif d'étanchéité destiné aux bouchons tournants d'un réacteur nucléaire.**

(30) Priorité : **01.07.83 FR 8310964**

(43) Date de publication de la demande :
**09.01.85 Bulletin 85/02**

(45) Mention de la délivrance du brevet :
**27.05.87 Bulletin 87/22**

(84) Etats contractants désignés :
**BE DE GB IT NL**

(56) Documents cités :
**EP-A- 0 018 895**
**FR-A- 2 045 605**
**FR-A- 2 155 075**
**FR-A- 2 349 923**
**GB-A- 1 594 254**

(73) Titulaire : **NOVATOME**
**La Boursidière R.N. 186**
**F-92357 Le Plessis Robinson (FR)**

(72) Inventeur : **Malaval, Claude**
**115bis avenue du Bois de Verrières**
**F-92160 Antony (FR)**
Inventeur : **Buret, Jacqui**
**22 avenue Salvador Allendé**
**F-91160 Saulx les Chartreux (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

## Description

La présente invention se rapporte à un dispositif d'étanchéité destiné aux bouchons tournants d'un réacteur nucléaire et plus particulièrement d'un réacteur surgénérateur.

Les réacteurs surgénérateurs, qui sont généralement refroidis par du métal liquide tel que le sodium comportent une cuve fermée par une dalle horizontale de grande épaisseur et remplie par le sodium liquide de refroidissement dans lequel est plongé le cœur du réacteur. Cette dalle horizontale est munie en son centre d'un bouchon tournant qui permet de positionner les machines de transfert des assemblages du cœur. Pour éviter d'une part la sortie de vapeur de sodium liquide à l'extérieur de la cuve et pour éviter d'autre part toute contamination radio-active du voisinage, il faut prévoir un dispositif d'étanchéité entre la dalle fixe et le bouchon tournant. Cette étanchéité doit être à la fois statique, pendant le fonctionnement normal du réacteur et dynamique, pendant la rotation du bouchon en vue par exemple du rechargement des assemblages du cœur. De plus, cette étanchéité doit présenter des qualités d'endurance et d'élasticité suffisantes pour supporter une durée prolongée de fonctionnement du réacteur et subir, ensuite, au moment de l'arrêt de celui-ci, un frottement important pendant la rotation du bouchon.

A cet effet, on connaît dans le FR-A-2 349 923 un dispositif d'étanchéité qui est réalisé par interposition de joints gonflables entre la dalle et la bride supportant le bouchon tournant. Mais ces joints ne sont pas fiables car ils sont en permanence sous pression pour résister à la pression interne de la cuve et en même temps, ils subissent pendant la rotation du bouchon une usure par frottement ce qui peut entraîner un déchirement du joint et par conséquent une défaillance du dispositif d'étanchéité.

On connaît également dans le FR-A-2 045 605 un dispositif formé par un joint métallique liquéfiable intercalé entre les parties fixes et les parties mobiles. Ce système est encombrant et complexe car il faut notamment prévoir un système de chauffage du métal préalablement à la mise en rotation du bouchon.

L'invention concerne donc un dispositif d'étanchéité de construction simple permettant d'éviter toute sortie de sodium sous forme de vapeur ou de tout autre substance radio-active de la cuve du réacteur, aussi bien pendant le fonctionnement du réacteur que pendant les opérations d'entretien de ce réacteur.

L'invention a ainsi pour objet un dispositif d'étanchéité pour bouchon tournant d'un réacteur surgénérateur fermé par une dalle horizontale comportant une ouverture cylindrique limitée par une bride de traversée, ledit bouchon étant maintenu dans cette ouverture par un élément support formé d'une part d'une semelle qui repose, pendant le fonctionnement du réacteur, sur la bride de traversée et d'autre part d'un prolongement cylindrique supportant une bague solidaire du mécanisme d'entraînement et de guidage du bouchon tournant caractérisé par le fait que la semelle et le prolongement cylindrique de l'élément support du bouchon ménagent avec la bague un espace annulaire pour le positionnement des organes d'étanchéité statique et dynamique entre le ciel du réacteur et l'extérieur, lesdits organes d'étanchéité sont constitués par :

un premier ensemble de joints supporté par une couronne inférieure qui est en appui sur la semelle de l'élément support du bouchon,

un deuxième ensemble de joints supporté par une couronne supérieure au-dessous de la bague,

et une membrane souple entre les deux couronnes.

Afin de bien faire comprendre l'invention, on va maintenant décrire à titre d'exemple non limitatif un mode de réalisation d'un dispositif d'étanchéité suivant l'invention.

La figure 1 représente une demi-vue en coupe du dispositif d'étanchéité conforme à l'invention au cours du fonctionnement du réacteur.

La figure 2 représente une demi-vue en coupe du dispositif d'étanchéité pendant la période de manutention des assemblages.

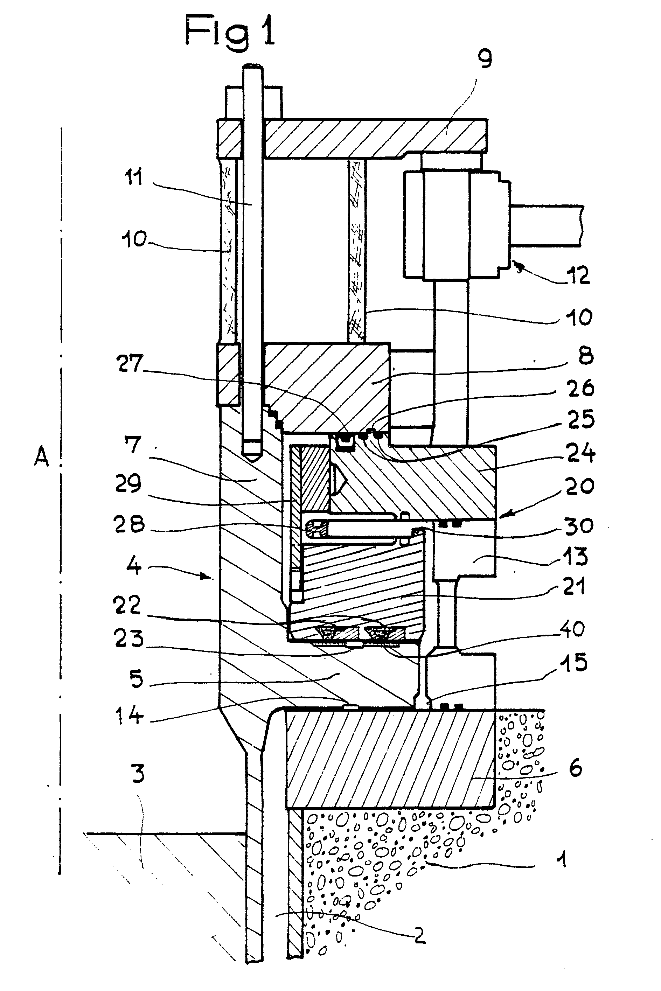

Sur la figure 1, on voit la dalle 1 du réacteur surgénérateur comportant en son centre une ouverture cylindrique 2 dans laquelle est placé un bouchon tournant 3 qui est destiné à positionner les machines de transfert au-dessus des assemblages du cœur.

Le bouchon 3 tournant autour de l'axe A est supporté par un élément support 4 formé d'une part d'une semelle 5 qui est en appui sur une bride de traversée 6 placée sur le pourtour de l'orifice 2 dans la dalle 1 et d'autre part d'un prolongement cylindrique 7. Une arrivée d'argon 14 est prévue entre la semelle 5 et la bride de traversée 6.

Une bague 8 est montée sur la partie supérieure du prolongement cylindrique 7, cette bague étant elle-même solidaire d'une plaque circulaire 9 par l'intermédiaire de pièces de liaison 10. La bague 8 et la plaque circulaire 9 sont fixées sur la partie supérieure de l'élément support 4 par des boulons 11. Un mécanisme 12 de soulèvement et d'entraînement du bouchon tournant 3, par paloniers à galets est prévu au-dessous de la plaque circulaire 9.

La semelle 5 et la bague 8 ménagent avec le prolongement cylindrique 7 un espace annulaire pour le montage d'un dispositif d'étanchéité désigné dans son ensemble par la référence 20. Ce dispositif d'étanchéité se compose d'une couronne inférieure 21 qui repose sur la face supérieure de la semelle 5. La couronne inférieure 21 supporte deux joints 22, en matériau élastomère avec une enveloppe similaire à celle d'un joint gonflable mais dont l'intérieur également en élastomère est de dureté inférieure. Le poids de ladite couronne correspond à l'effort nécessaire pour écraser les joints 22 sur la semelle 5, afin d'assurer une parfaite étanchéité. Entre les joints 22 se situe une arrivée d'argon 23 dont la pression d'alimentation est légèrement supérieure au ciel du réacteur. Cette alimentation permet de contrôler la bonne étanchéité des joints 22 et d'éviter la remontée d'argon pollué en cas de défaillance desdits joints.

Au-dessus de la couronne 21 est placée une couronne supérieure 24 directement supportée par la bride de traversée 6 par l'intermédiaire d'une manchette 13. Cette couronne supérieure 24 est positionnée de telle manière que la bague 8 soit en appui sur la face supérieure de ladite couronne pendant le fonctionnement du réacteur. La face supérieure de la couronne 24 est munie de deux joints toriques 25 avec une alimentation d'argon 26 entre les joints pour contrôler l'étanchéité. Ces joints ont pour rôle d'assurer une seconde barrière d'étanchéité avec le ciel du réacteur et l'extérieur, lors du fonctionnement du réacteur. De plus, cette couronne supérieure 24 est munie d'un joint gonflable 27 dont la fonction sera définie ultérieurement.

Les couronnes inférieures et supérieures (21-24) sont reliées entre elles par une membrane souple 28. Par ailleurs, des tirants 29 fixés sur la couronne supérieure 24 permettent d'une part de limiter le déplacement vertical de la couronne inférieure 21 afin de ne pas solliciter la membrane 28 lors des opérations de montage ou de démontage du dispositif d'étanchéité 20 et d'autre part de limiter la rotation de la couronne inférieure 21 par rapport à la couronne supérieure 24 pendant la rotation du bouchon 3 pour éviter des contraintes de cisaillement au niveau de la membrane 28. Enfin, une butée 30 prévue sur la face supérieure de la couronne inférieure 21 limite la course de compression de la membrane 28 lorsque la butée 30 est en contact avec la couronne supérieure 24.

Lors du fonctionnement du réacteur (figure 1), la semelle 5 du bouchon tournant 3 est en appui sur la bride de traversée 6. Cet appui permet d'éviter les remontées d'aérosols dans les joints 22 et par suite d'empêcher leur collage avec la semelle 5. La bague 8 est également en appui sur la couronne supérieure 24. L'étanchéité entre le ciel du réacteur et l'extérieur est réalisée par les joints 22 et par la membrane souple 28. Une barrière d'étanchéité supplémentaire est assurée par les joints toriques 25 qui permettent principalement de pallier à une rupture de la membrane 28 due par exemple à une surpression dans le réacteur. La surveillance de l'étanchéité des joints 22 et 25 pendant le fonctionnement du réacteur est obtenue par les alimentations argon 23 et 26.

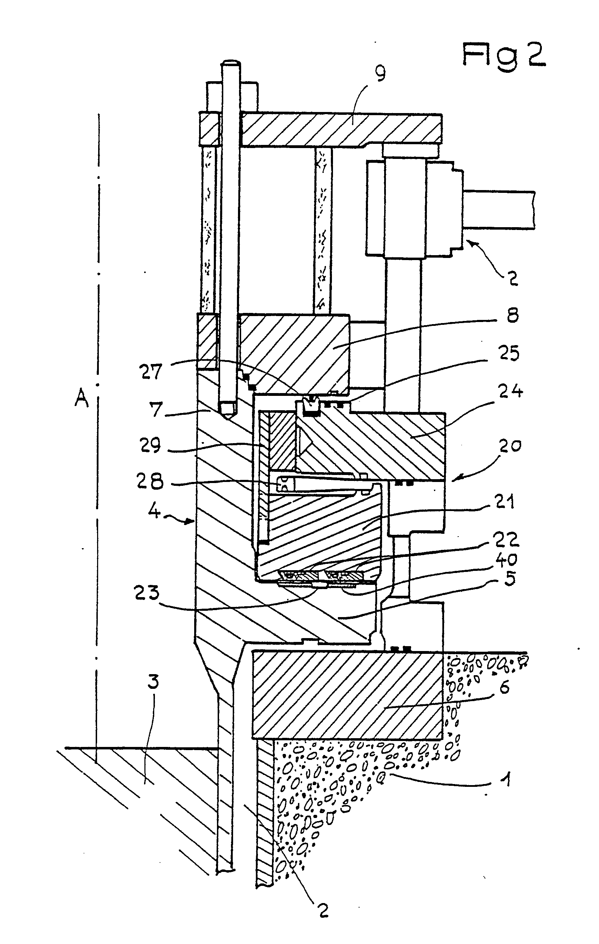

Au cours des manutentions des assemblages (figure 2), l'ensemble bouchon tournant 3 et élément support 4 est soulevé à l'aide du mécanisme 12 d'entraînement par palonniers à galets. La semelle 5 se dégage de la bride de traversée 6 ainsi que la bague 8 de la couronne supérieure 24. A ce moment, le joint gonflable 27 vient s'appliquer sous la bague 8. Dans cette configuration, l'étanchéité entre le ciel du réacteur et l'extérieur est réalisée par les joints 22, la membrane 28 et le joint gonflable 27. Pendant la rotation du bouchon tournant 3, les joints 22 frottent chacun sur une piste 40 prévue sur la face supérieure de la semelle 5. Ces pistes 40 sont constituées par un revêtement plastique ou métallique formant une surface lisse ayant un bon coefficient de frottement.

Le remplacement des joints 22 peut d'ailleurs être effectué chaque fois que cela est nécessaire en procédant de la façon suivante. Tout d'abord, on démonte le mécanisme 12 d'entraînement et de guidage du bouchon tournant 3, on alimente le barrage d'argon 14 (figure 1) au droit de l'appui semelle 5-bride de traversée 6 et enfin on soulève l'ensemble du dispositif d'étanchéité 20. Pendant le remplacement des joints 22, on met en place un joint gonflable dans la gorge 15 pour maintenir l'étanchéité vis-à-vis du ciel du réacteur.

On voit donc que les avantages principaux du dispositif suivant l'invention sont d'améliorer l'étanchéité à la fois statique et dynamique entre le bouchon tournant et le ciel du réacteur tout en étant de construction simple et d'un encombrement réduit.

**Revendications**

1. Dispositif d'étanchéité pour bouchon tournant (3) d'un réacteur surgénérateur fermé par une dalle horizontale (1) comportant une ouverture cylindrique (2) limitée par une bride de traversée (6), ledit bouchon tournant (3) étant maintenu dans l'ouverture cylindrique (2) par un élément support formé d'une part d'une semelle (5) qui repose, pendant le fonctionnement du réacteur, sur la bride de traversée (6) et d'autre part d'un prolongement cylindrique (7), à la partie supérieure duquel est montée une bague (8) solidaire du mécanisme d'entraînement et de soulèvement du bouchon tournant (3), caractérisé par le fait que la semelle (5) et le prolongement cylindrique (7) de l'élément support (4) du bouchon tournant (3) ménagent avec la bague (8) un espace annulaire pour le positionnement des organes d'étanchéité (20) statique et dynamique entre le ciel du réacteur et l'extérieur, lesdits organes d'étanchéité (20) étant constitués par :

un premier ensemble de joints (22) supporté par une couronne inférieure (21) qui est en appui sur la semelle (5),

un deuxième ensemble de joints (25-27) supporté par une couronne supérieure (24) au-dessous de la bague (8),

et une membrane souple (28) reliant les couronnes (21-24) entre elles.

2. Dispositif selon la revendication 1, caractérisé par le fait que le deuxième ensemble de joints est formé par des joints toriques (25) et un joint gonflable (27).

3. Dispositif selon les revendications 1 et 2, caractérisé par le fait que, pendant le fonctionnement du réacteur, l'étanchéité entre la couronne supérieure (24) et la bague (8) est assurée par les joints toriques (25) et pendant les opérations de manutention, par le joint gonflable (27).

4. Dispositif selon la revendication 1, caractérisé par le fait qu'au niveau des ensembles de joints (22-25) débouche une arrivée (23-26) d'un gaz de contrôle de l'étanchéité.

5. Dispositif selon la revendication 1, caractérisé par le fait que des tirants (29) fixés sur la couronne supérieure (24) limitent les déplacements verticaux de la couronne inférieure (21).

6. Dispositif selon la revendication 1, caractérisé par le fait que la course de compression de la membrane (28) est limitée par une butée (30) prévue sur la face supérieure de la couronne (21).

7. Dispositif selon la revendication 1, caractérisé par le fait que la couronne supérieure (24) est directement supportée par la bride de traversée (6) par l'intermédiaire d'une manchette 13.

## Claims

1. Sealing device for a rotating plug (3) of a breeder reactor closed by a horizontal slab (1) incorporating a cylindrical opening (2) bounded by a passage flange (6), the said rotating plug (3) being held in the cylindrical opening (2) by a supporting component formed on the one hand by a sole (5) which rests on the passage flange (6) during the operation of the reactor and, on the other hand, by a cylindrical extension (7) on the upper part of which is mounted a ring (8) fixed solidly to the mechanism for driving and lifting the rotating plug (3), characterized in that the sole (5) and the cylindrical extension (7) of the component (4) supporting the rotating plug (3) form, with the ring (8), an annular space for the positioning of members (20) for static and dynamic sealing between the reactor head space and the exterior, the said sealing members (20) consisting of :

a first set of seals (22) supported by a lower crown ring (21) which bears on the sole (5),

a second set of seals (25-27) supported by an upper crown ring (24) underneath the ring (8), and

a flexible membrane (28) connecting the crown rings (21-14) together.

2. Device as claimed in claim 1, characterized in that the second set of seals is formed by ring seals (25) and a swellable seal (27).

3. Device as claimed in claims 1 and 2, characterized in that, during the operation of the reactor, the sealing between the upper crown ring (24) and the ring (8) is provided by the ring seals (25) and during the maintenance operations, by the swellable seal (27).

4. Device as claimed in claim 1, characterized in that an inlet (23-26) for a gas for monitoring the sealing opens into the region of the sets of seals (22-25).

5. Device as claimed in claim 1, characterized in that tie rods (29) fixed on the upper crown ring (24) restrict the vertical movements of the lower crown ring (21).

6. Device as claimed in claim 1, characterized in that the distance of compression of the membrane (28) is restricted by a thrust stop (30) provided on the upper face of the crown ring (21).

7. Device as claimed in claim 1, characterized in that the upper crown ring (24) is supported directly by the passage flange (6) through the intermediacy of a collar (13).

## Patentansprüche

1. Abdichtungsvorrichtung für den drehbaren Verschluß (3) eines Brutreaktors, der durch eine horizontale Decke (1) verschlossen ist, die eine Zylinderöffnung (2) aufweist, die durch einen Durchgangsflansch (6) begrenzt ist, wobei der drehbare Deckelverschluß (3) in der Zylinderöffnung (2) mittels eines Trägerelementes gehalten wird, das einerseits aus einem Gurt (5), der während des Betriebs des Reaktors auf dem Durchgangsflansch (6) ruht und andererseits aus einer zylindrischen Verlängerung (17) besteht, an deren oberem Bereich ein Ring (8) montiert ist, der fest mit dem Mechanismus zum Antrieb und Abheben des drehbaren Deckelverschlusses (3) verbunden ist, dadurch gekennzeichnet, daß der Gurt (5) und die zylindrische Verlängerung (7) des Trägerelements (4) des drehbaren Deckelverschlusses (3) zwischen dem Ring (8) einen ringförmigen Raum zur Positionierung von statischen und dynamischen Dichtungen (20) zwischen der Decke des Reaktors und dem Äußeren freilassen, wobei die Dichtorgane (20) bestehen aus :

einer ersten Dichtungsgruppe (22), die von einer unteren Krone (21) getragen wird, die auf dem Gurt (5) aufliegt,

einer zweiten Dichtungsgruppe (25-27), die von einer oberen Krone (24) unterhalb des Rings (8) getragen wird,

und einer weichen Membran (28), die die Kronen (21, 24) untereinander verbindet.

2. Vorrichtung nach Anspruch 1, dadurch gekennzeichnet, daß die zweite Gruppe der Dichtungen aus torusförmigen Dichtungen (25) und einer aufblasbaren Dichtung (27) besteht.

3. Vorrichtung nach den Ansprüchen 1 und 2, dadurch gekennzeichnet, daß während des Betriebs des Reaktors die Dichtigkeit zwischen der oberen Krone (24) und dem Ring (28) durch die torusförmigen Dichtungen (25) und während der Wartungsarbeiten durch die aufblasbare Dichtung (27) gewährleistet ist.

4. Vorrichtung nach Anspruch 1, dadurch gekennzeichnet, daß auf der Höhe der Dichtungsgruppen (22-25) ein Auslaß (23-26) eines Dichtigkeits-Kontrollgases mündet.

5. Vorrichtung nach Anspruch 1, dadurch gekennzeichnet, daß die auf der oberen Krone (24) befestigten Ziehstäbe (29) die Vertikalverschiebung der unteren Krone (21) begrenzen.

6. Vorrichtung nach Anspruch 1, dadurch gekennzeichnet, daß der Kompressionshub der Membrane (28) durch einen Anschlag (30) begrenzt ist, der auf der Oberseite der Krone (21) vorgesehen ist.

7. Vorrichtung nach Anspruch 1, dadurch gekennzeichnet, daß die obere Krone (24) direkt von dem Durchgangsflansch (6) mittels einer Man- schette (13) getragen wird.

# Fig 1

Fig 2